# EUROPÄISCHE PATENTANMELDUNG

(11) **EP 4 528 255 A2**
(43) Veröffentlichungstag der Anmeldung: **26.03.2025**
(21) Anmeldenummer: 24188526.8
(22) Anmeldetag: 15.07.2024
(51) Int. Cl.: G01N 21/88, G01N 21/90, G01N 21/954, B65D 1/00, D21J 3/10

(54) **OPTISCHE INSPEKTION VON PULPEFLASCHEN**

(30) Priorität: 21.09.2023 DE 102023125598
(71) Anmelder: KRONES AG, 93073 Neutraubling (DE)
(72) Erfinder: Kwirandt, Rainer, 93073 Neutraubling (DE); Niedermeier, Anton, 93073 Neutraubling (DE); Piana, Stefan, 93073 Neutraubling (DE); Lindner, Peter, 93073 Neutraubling (DE)
(74) Vertreter: Grünecker Patent- und Rechtsanwälte PartG mbB

(57) **Zusammenfassung**

Die vorliegende Erfindung betrifft eine Vorrichtung zur optischen Inspektion einer Pulpeflasche. Die Vorrichtung umfasst eine Beleuchtungseinrichtung mit einer Öffnung, wobei eine Mündung der Pulpeflasche unterhalb der Öffnung der Beleuchtungseinrichtung angeordnet werden kann; und eine Kamera, die ausgebildet ist, ein Bild von zumindest einem Teil einer Innenwand der Pulpeflasche durch die Öffnung der Beleuchtungseinrichtung hindurch oder von der Öffnung der Beleuchtungseinrichtung aus aufzunehmen, wobei die Pulpeflasche derart angeordnet werden kann, dass der Teil der Innenwand der Pulpeflasche von der Beleuchtungseinrichtung ausgeleuchtet wird. Weiterhin stellt die vorliegende Erfindung ein Verfahren zur optischen Inspektion eines Pulpebehälters, insbesondere einer Pulpeflasche, bereit.

## Beschreibung

Die vorliegende Erfindung betrifft eine Vorrichtung und ein Verfahren zur optischen Überprüfung von Pulpeflaschen, insbesondere von deren Innenwand.

Bevor Behälter, beispielsweise Getränkeflaschen und -dosen, für eine Abfüllung verwendet werden können, muss sichergestellt werden, dass sie keine Beschädigungen, wie Risse oder Löcher, oder Verschmutzungen aufweisen. Durchsichtige Behälter können dazu mittels Durchlicht auf Verschmutzungen, Fremdkörper oder Beschädigungen von außen überprüft werden. Für undurchsichtige Dosen gibt es Innenwandinspektionen, bei denen Licht von einer großflächigen Lichtquelle durch die große Dosenmündung, die etwa den gleichen Durchmesser wie die Dose aufweist, eingestrahlt wird. Vorrichtungen zur optischen Inspektion von Behältern, insbesondere von Getränkedosen, sind beispielsweise aus DE 199 40 363 A1 und DE 10 2017 123 684 A1 bekannt.

Pulpebehälter hingegen bestehen aus diffusem, undurchsichtigem Material, sodass der Innenraum nicht ohne Weiteres von außen inspiziert werden kann. Zudem weisen insbesondere Pulpeflaschen gegenüber Dosen einen dünnen Flaschenhals auf, sodass der Lichtzugang in das Innere und damit eine Ausleuchtung der Innenwand der Flasche erschwert wird.

Daher ist es ein Ziel der vorliegenden Erfindung, eine Vorrichtung und ein Verfahren bereitzustellen, womit eine zuverlässige Inspektion von Pulpeflaschen auf Verschmutzungen oder Beschädigungen möglich ist. Zu diesem Zweck stellt die Erfindung eine Vorrichtung nach Anspruch 1 und ein Verfahren nach Anspruch 11 bereit.

Erfindungsgemäß umfasst die Vorrichtung zur optischen Inspektion einer Pulpeflasche eine Beleuchtungseinrichtung mit einer Öffnung, wobei eine Mündung der Pulpeflasche unterhalb der Öffnung der Beleuchtungseinrichtung angeordnet werden kann; und eine Kamera, die ausgebildet ist, ein Bild von zumindest einem Teil einer Innenwand der Pulpeflasche durch die Öffnung der Beleuchtungseinrichtung hindurch oder von der Öffnung der Beleuchtungseinrichtung aus aufzunehmen, wobei die Pulpeflasche derart angeordnet werden kann, dass der Teil der Innenwand der Pulpeflasche von der Beleuchtungseinrichtung ausgeleuchtet wird.

Anders als beispielsweise Metalldosen reflektiert Pulpe nicht das auftreffende Licht, sondern streut dieses lediglich diffus bzw. absorbiert einen Teil. Darüber hinaus weisen Dosen üblicherweise einen größeren Mündungsdurchmesser als Flaschen auf, sodass es vergleichsweise einfach ist, Licht in das Innere einer Dose einzubringen. Um die Innenwand der Pulpeflasche für eine optische Untersuchung auf Beschädigungen und/oder Verschmutzungen hinreichend auszuleuchten, muss nun ausreichend Licht in das Innere der Pulpeflasche durch die Mündung und den Flaschenhals eingekoppelt und das im Inneren gestreute Licht von einer Kamera aufgenommen werden. Dieses Ziel wird durch die beanspruchte Konfiguration aus einer Beleuchtungseinrichtung und einer Kamera bezüglich einer darunter befindlichen Pulpeflasche erreicht.

Die Pulpeflasche kann ganz oder überwiegend aus einer als Pulpe bezeichneten Mischung aus Wasser, Fasern und gegebenenfalls weiteren Additiven bestehen. Die Fasern können natürlichen Ursprungs sein und biologisch abbaubar sein. Die Fasern können Lignin, Bananenblätter und/oder Chinin umfassen. Die Fasern können beispielsweise Zellulosefasern, Fasern von Nadelhölzern, Blattgehölzen und/oder Platanen und/oder von Gräsern, Schilf und/oder Bambus oder dergleichen umfassen. Die Fasern können Seidenfäden, Spinnenfäden, Algen, natürliche Fasern (wie Donau-Silphie-Fasern, Hanf, Mais, Baumwolle), Bananenschalen, Orangenschalen, Gras, Stroh, Kartoffelstärke oder aufbereiteten Kuhdung umfassen. Auch können Zellstofffasern vorgesehen sein, die einem Prozess entstammen, durch den sie künstlich gezüchtet wurden. Diese alternativen Materialien können bei Materialengpässen von Holz als Grundstoff für eine fluide Masse mit Fasern, den Grundstoff vollständig oder teilweise ersetzen. Ebenso können die Fasern Fasermischungen aus holzfremden Material, beispielsweise Baumwolle, Hanf, und/oder Textilfasern umfassen.

Eine Innenwand der Pulpeflasche bezeichnet die gesamte Fläche, die den Innenraum bzw. das Innere der Pulpeflasche begrenzt. Dazu zählen beispielsweise der Flaschenboden, der Mantel und/oder der Flaschenhals. Einfallendes Licht wird von dieser Fläche gestreut und fällt durch die Mündung der Pulpeflasche auf die Kamera.

Typischerweise beträgt ein Durchmesser der Öffnung der Pulpeflaschen nicht mehr als 5 cm, insbesondere nicht mehr als 3 cm. Eine Pulpeflasche kann sich weiterhin dadurch auszeichnen, dass ihr Durchmesser von der Mündung in Richtung des Bodens zunimmt und dass ihre Höhe größer als der Durchmesser der Mündung und/oder größer als der Durchmesser des Bodens ist.

Die Beleuchtungseinrichtung kann eine Lichtquelle oder eine Mehrzahl von Lichtquellen umfassen. Weiterhin kann die Beleuchtungseinrichtung ringförmig oder ringartig ausgebildet sein. Ringartig schließt in diesem Zusammenhang ein, dass der Teil der Beleuchtungseinrichtung, der die Öffnung umgibt, dreieckig, rechteckig, anderweitig vieleckig oder auch unregelmäßig ausgebildet sein kann. Ebenso kann besagter Teil der Beleuchtungseinrichtung nur einen Abschnitt der Öffnung umgeben. Eine ringförmige Beleuchtungseinrichtung umfasst insbesondere eine kreisförmige oder elliptische Umgebung der Öffnung. Der Mittelpunkt der Beleuchtungseinrichtung ist insbesondere so angeordnet, dass sich die Mündung der Pulpeflasche senkrecht unterhalb des Mittelpunkts befindet. Durch diese Konfiguration wird eine besonders gleichmäßige Ausleuchtung der Innenwand der Pulpeflasche erreicht, was eine zuverlässige Inspektion ermöglicht.

Ein Spektrum der Beleuchtungseinrichtung kann im sichtbaren Bereich des elektromagnetischen Spektrums liegen (400 nm bis 800 nm). Es kann jedoch von Vorteil sein, ultraviolettes Licht, beispielsweise zwischen 200 nm und 400 nm, einzusetzen, um damit eine Fluoreszenz der Pulpe zu induzieren, sodass die Pulpeflasche selbst zum Leuchten gebracht wird. Dadurch kann im Fall von Verschmutzungen ein höherer Kontrast zwischen der Pulpe und der Verschmutzung erreicht werden, was die Identifikation verschmutzter Pulpeflaschen erleichtert. Stattdessen kann auch Infrarotlicht, beispielsweise zwischen 800 nm und 1500 nm, eingesetzt werden. Dies erleichtert die Identifikation von Löchern oder Rissen in der Innenwand der Pulpeflasche, weil ein höherer Kontrast zwischen der Pulpe und einer Metallform, die die Pulpeflasche umgibt, erreicht wird.

Die Kamera kann ein Objektiv und einen bildgebenden Chip umfassen, wobei das Objektiv das gestreute Licht, das durch die Mündung der Pulpeflasche tritt, bündelt und auf den bildgebenden Chip abbildet.

Ebenso kann die Vorrichtung ein weiteres Objektiv umfassen, das zwischen der Mündung der Pulpeflasche und der Kamera angeordnet ist. Bei dem weiteren Objektiv kann es sich beispielsweise um ein sogenanntes Innenwandobjektiv handeln. Darüber hinaus kann das Objektiv eine große Tiefenschärfe besitzen, um einen möglichst großen Bereich zwischen Flaschenhals und Flaschenboden scharf abbilden zu können.

Optional weist das Objektiv einen doppelt gekreuzten Strahlengang auf, wobei sich der aus dem Objektiv ausgelagerte, stark verjüngte Strahlengang, bzw. dessen Brennpunkt, im Bereich der Mündungseichel befindet. Damit wird gewährleistet, dass trotz etwaiger Verschiebungen der Pulpeflaschen beim Transport der Strahlengang frei bleibt, also nicht durch die Behältermündung abgedunkelt wird.

Die Kamera kann in der Öffnung der Beleuchtungseinrichtung angeordnet sein.

Zunächst kann die Anordnung der Kamera in der Öffnung der Beleuchtungseinrichtung eine kompakte Bauform darstellen, sodass die Kamera und die Beleuchtungseinrichtung auch in geringem Abstand zur Mündung der Pulpeflasche angeordnet werden können. Wenn es sich insbesondere um eine ringförmige oder ringartige Beleuchtungseinrichtung handelt, kann das Licht symmetrisch in die Pulpeflasche eingestrahlt werden, was zu einer gleichmäßigen Ausleuchtung der Innenwand der Pulpeflasche führt.

Die Beleuchtungseinrichtung kann derart angeordnet sein, dass Licht von der Beleuchtungseinrichtung in einem Winkel zwischen 60° und 90°, insbesondere zwischen 70° und 90°, gegenüber einer Mündungsebene der Pulpeflasche eingestrahlt wird.

Der Angabe des Winkels liegen strahlenoptische Annahmen zugrunde. Je näher der Winkel an 90° liegt, desto besser wird das Licht durch den Flaschenhals in das Innere der Pulpeflasche eingestrahlt. Ein möglichst großer Winkel (kleiner oder gleich 90°) sorgt daher für eine gute Ausleuchtung und für eine zuverlässige optische Erkennung von Beschädigungen und/oder Verschmutzungen. Ist der Winkel zu klein, kann das Licht nicht tief genug in die Pulpeflasche gelangen und Teile der Innenwand, vor allem der Boden, werden nicht ausreichend beleuchtet. Dadurch wird die Zuverlässigkeit der Inspektion verschlechtert, weil Beschädigungen und/oder Verschmutzungen wegen schlechter Ausleuchtung und damit geringen Kontrasts nicht erkannt werden.

Die beschriebene Vorrichtung kann weiterhin ein entspiegeltes Schutzfenster umfassen, wobei die Beleuchtungseinrichtung und die Kamera auf der der Pulpeflasche abgewandten Seite des Schutzfensters angeordnet sind und wobei die Kamera nicht in direktem Kontakt mit dem Schutzfenster steht.

Das Schutzfenster schirmt die Beleuchtungseinrichtung und die Kamera vor etwaigen Verschmutzungen ab und ermöglicht eine zuverlässige Durchführung der optischen Inspektion. Eine Vermeidung eines direkten Kontakts zwischen der Kamera und dem Schutzfenster stellt dabei zusätzlich sicher, dass es durch Stöße nicht zu Beschädigungen der Kamera kommt. Das entspiegelte Schutzfenster besitzt beispielsweise eine Antireflex-Beschichtung, die für den Wellenlängenbereich des benutzten Licht eine geringe Reflexion aufweist, beispielsweise im Bereich von einem Prozent oder weniger. Dadurch werden durch Reflexionen erzeugte Artefakte, die zu einer falschen Identifikation von Schmutz oder Rissen in der Pulpeflasche führen könnten, verringert.

Zwischen der Kamera und dem Schutzfenster kann ein Schutzelement aus elastischem, lichtundurchlässigem Material, beispielsweise Moosgummi, angeordnet sein.

Das Element erfüllt dabei zwei Zwecke. Zum einen dämpft es durch seine elastischen Eigenschaften Stöße ab und schützt somit die hinter dem Schutzfenster angeordnete Kamera vor Beschädigungen durch Stöße. Zum anderen unterdrückt das lichtundurchlässige Element, dass Licht von der Beleuchtungseinrichtung direkt in die Kamera fällt, was zu einer Verfälschung und Kontrastverschlechterung der aufgenommenen Bilder führen und damit die Zuverlässigkeit der Inspektion verschlechtern würde.

Die Beleuchtungseinrichtung kann eine Mehrzahl von Lichtquellen wie Chip-on-Board LEDs (COB-LEDs) umfassen. Im Fall einer ringförmigen oder ringartigen Beleuchtungseinrichtung, bei der die Kamera in der Öffnung der Beleuchtungseinrichtung angeordnet ist, können die LEDs insbesondere ringsum die Kamera (das Objektiv) angeordnet sein.

Mit den COB-LEDs ist es möglich, auf einer kleinen Fläche eine Vielzahl an einzelnen LED-Chips eng an eng anzuordnen. Dadurch kann eine hohe Leistungsdichte erreicht und eine hohe Lichtleistung in das Innere der Pulpeflasche eingestrahlt werden. Bei der beschriebenen ringförmigen oder ringartigen Beleuchtungseinrichtung kann eine hohe Lichtleistung vor allem rundum in die Pulpeflasche eingestrahlt werden, um eine gleichmäßige Ausleuchtung der Innenwand zu erreichen. Die entsprechend aufgenommenen Bilder weisen dadurch einen hohen Kontrast auf und die Erkennung von Beschädigungen und/oder Verschmutzungen ist besonders zuverlässig.

Als Beispiel sei eine ringförmige Beleuchtungseinrichtung mit einem Durchmesser von 14 mm genannt. Darauf können sich 130 LED-Chips befinden, die mit 130 Watt-Impulsen betrieben werden.

Die LEDs können direkt auf dem Schutzfenster angeordnet sein. Dies resultiert in einer kompakten Konstruktion, weil kein separates Element für die Montage der LEDs notwendig ist.

Die Vorrichtung kann weiterhin einen Strahlteiler und eine Lichtquelle umfassen. Der Strahlteiler kann zwischen der Mündung der Pulpeflasche und der Kamera angeordnet sein. Die Lichtquelle kann als homogene Flächenbeleuchtung ausgebildet sein und vom Strahlteiler zumindest teilweise durch die Mündung in das Innere der Pulpeflasche eingeblendet werden. Optional kann zwischen dem Strahlenteiler und der Lichtquelle ein optisches Element angeordnet sein. Das optische Element kann ein Linsenelement und/ oder Polarisationsfilter umfassen.

Alternativ zur vorstehend beschriebenen Konfiguration kann die Vorrichtung weiterhin einen Strahlteiler und einen Patternprojektor umfassen. Der Strahlteiler kann zwischen der Mündung der Pulpeflasche und der Kamera angeordnet sein und der Patternprojektor kann ausgebildet sein, ein optisches Muster zu erzeugen und derart angeordnet sein, dass das von dem Patternprojektor erzeugte Muster vom Strahlteiler teilweise durch die Mündung in das Innere der Pulpeflasche reflektiert wird.

Während die zuvor beschriebene, möglichst gleichmäßige, Ausleuchtung der Innenwand der Pulpeflasche auf die Erkennung von Beschädigungen und/oder Verschmutzungen gerichtet ist, kann mithilfe des optischen Musters erkannt werden, ob Materialverteilungsfehler vorliegen. Unregelmäßigkeiten in der Wandstärke der Pulpeflasche führen zu einer Verzerrung des optischen Musters (gegenüber einer ebenen Oberfläche), die in einem entsprechend von der Kamera aufgenommenen Bild erkannt werden können.

Bei dem Strahlteiler kann es sich um einen 50:50-Strahlteiler handeln, der etwa 50% der auftreffenden Strahlung/Leistung reflektiert und den verbleibenden Teil transmittiert. Allerdings sind auch andere Strahlteiler mit einem anderen Reflektionsanteil (25% oder 40%) denkbar.

Umfasst die Vorrichtung ein weiteres Objektiv, so ist dieses insbesondere zwischen dem Strahlteiler und der Mündung der Pulpeflasche angeordnet. Dadurch kann das weitere Objektiv sowohl zur Einkopplung des optischen Musters in die Pulpeflasche, als auch zur Bündelung des aus der Pulpeflasche gestreuten Lichts verwendet werden.

Das von dem Patternprojektor erzeugte Muster kann rasterförmig sein, und/oder es kann konzentrische Kreise umfassen.

Die beiden genannten Arten von Mustern erlauben eine möglichst eindeutige Identifikation von Materialverteilungsfehlern. Wenn die Pulpeflasche durch Materialverteilungsfehler eine unregelmäßige Wandstärke aufweist, verbiegt sich das optische Muster an Stellen mit abweichender Wandstärke. Die Verbiegung, die eine Abweichung von einem regelmäßigen Muster aus einem Raster oder konzentrischen Kreisen abweicht, kann in dem von der Kamera aufgenommenen Bild ausgewertet werden. Dabei sind Abweichungen von geraden Linien (in einem Raster) oder Kreisen besonders zuverlässig erkennbar.

Die Erfindung stellt weiterhin ein System bereit, das eine Vorrichtung zur Herstellung von Pulpeflaschen und die beschriebene Vorrichtung zur optischen Inspektion einer Pulpeflasche umfasst. Dabei ist das System derart ausgebildet, dass die Pulpeflaschen nach der Herstellung zu der Vorrichtung zur optischen Inspektion transportiert werden.

Ein erfindungsgemäßes Verfahren zur optischen Inspektion eines Pulpebehälters, insbesondere einer Pulpeflasche, umfasst das Beleuchten eines Teils einer Innenwand des Pulpebehälters durch seine Mündung mit einer Beleuchtungseinrichtung, und das Aufnehmen eines Bildes durch die Mündung des Pulpebehälters mit einer Kamera, indem das aus dem Inneren des Pulpebehälters gestreute Licht mittels der Kamera aufgenommen wird.

Das Verfahren löst dabei das eingangs genannte technische Problem, eine zuverlässige Inspektion von Pulpebehältern wie Pulpeflaschen auf Beschädigungen und/oder Verschmutzungen zu erreichen.

Da Licht von der Beleuchtungseinrichtung kann in einem Winkel zwischen 60° und 90°, insbesondere zwischen 70° und 90°, gegenüber einer Mündungsebene der Pulpeflasche eingestrahlt werden. Wie bereits im Zusammenhang mit der Vorrichtung erläutert, wird durch die angegebenen Winkelbereiche eine zuverlässige Inspektion ermöglicht.

Das Verfahren kann weiterhin umfassen, dass ein Teil einer Innenwand des Pulpebehälters mit einem optischen Muster, das beispielsweise von einem Patternprojektor erzeugt wird, beleuchtet wird, und dass ein weiteres Bild aufgenommen wird, indem das aus dem Inneren des Pulpebehälters gestreute Licht mittels der Kamera aufgenommen wird.

Mit diesem Verfahren, in dem die beiden Bilder ausgewertet werden, kann ein Pulpebehälter sowohl auf Beschädigungen und/oder Verschmutzungen, als auch auf unregelmäßige Materialverteilungen untersucht werden. Es ergibt sich also eine umfassendere Charakterisierung und eine zuverlässigere Inspektion des Pulpebehälters.

Die Reihenfolge der beiden Bilder kann beliebig sein. Es kann auch zunächst das Bild mit dem optischen Muster aufgenommen werden und dann das Bild mit der möglichst gleichmäßigen Ausleuchtung (also ohne ein Muster) oder umgekehrt.

Das verwendete Muster kann rasterförmig sein und/oder konzentrische Kreise umfassen. Es wird auf die zuvor genannten Vorteile dieser bestimmten Muster verwiesen.

Der zeitliche Abstand zwischen der Aufnahme des (ersten) Bildes und des weiteren Bildes kann weniger als 100 µs, insbesondere weniger als 50 µs, betragen.

Üblicherweise wird das beschriebene Verfahren derart implementiert, dass die Beleuchtungseinrichtung und die Kamera ortsfest sind, während die Pulpebehälter auf einer Transporteinrichtung einbahnig daran vorbei transportiert werden. Für die beiden Bilder sollte die Belichtung der Innenwand des Pulpebehälters (mit der gleichmäßigen Ausleuchtung und dem optischen Muster) etwa identisch sein. Zu diesem Zweck sollten sich die relative Position zwischen der Mündung des Pulpebehälters und der Beleuchtungseinrichtung, sowie die relative Position zwischen der Mündung des Pulpebehälters und der Kamera, möglichst wenig ändern. Für übliche Transportgeschwindigkeiten für Pulpebehälter bewegt sich der Pulpebehälter in der angegebenen Zeit um weniger als einen Millimeter und damit um eine Strecke, die deutlich geringer ist als die Mündung des Pulpebehälters. Dadurch können für beide Bilder eine hinreichend gleiche Belichtung und damit hinreichend gleiche Bedingungen für die Bildaufnahme erreicht werden.

Es versteht sich, dass das beschriebene Verfahren mit der hierin beschriebenen Vorrichtung zur optischen Inspektion einer Pulpeflasche durchgeführt werden kann.

Weitere Merkmale und Vorteile werden nachfolgend anhand der beispielhaften Figuren erläutert. Dabei zeigen:
- Figur 1: eine schematische Darstellung einer Vorrichtung zur optischen Inspektion einer Pulpeflasche gemäß einer ersten Ausführungsform;
- Figur 2: eine schematische Darstellung einer Vorrichtung zur optischen Inspektion einer Pulpeflasche gemäß einer zweiten Ausführungsform;
- Figur 3A: eine schematische Detailansicht einer Vorrichtung zur optischen Inspektion einer Pulpeflasche gemäß einer dritten Ausführungsform;
- Figur 3B: eine schematische Detailansicht einer Vorrichtung zur optischen Inspektion einer Pulpeflasche gemäß einer vierten Ausführungsform
- Figur 4: eine vereinfachte, schematische Draufsicht auf die Vorrichtung gemäß der dritten Ausführungsform.

Im Folgenden und in den Figuren werden in den verschiedenen Ausführungsbeispielen, sofern nicht anders spezifiziert, die gleichen Bezugszeichen für gleiche oder entsprechende Elemente verwendet.

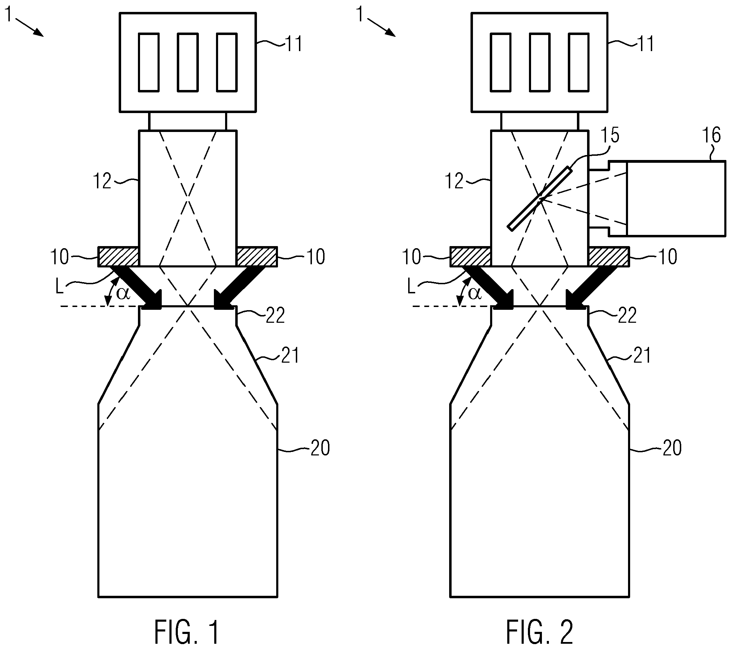

Figur 1 zeigt eine Vorrichtung 1 zur optischen Inspektion einer Pulpeflasche 20 gemäß einer ersten Ausführungsform der Erfindung als schematische Seitenansicht. Die Vorrichtung 1 umfasst eine Beleuchtungseinrichtung 10, die ausgebildet ist, Licht L zu emittieren. Wenn eine Pulpeflasche 20 mit einem Flaschenhals 21 und einer Mündung 22 unterhalb der Vorrichtung 1 angeordnet ist, wird das von der Beleuchtungseinrichtung 10 emittierte Licht L durch die Mündung 22 in das Innere der Pulpeflasche eingestrahlt. Auf diese Weise wird zumindest ein Teil der Innenwand der Pulpeflasche 20 ausgeleuchtet. Dabei wird das Licht L unter einem Winkel α gegenüber der Mündungsebene in die Mündung eingestrahlt. Der Winkel α kann beispielsweise zwischen 60° und 90°, insbesondere zwischen 70° und 90° betragen. Man beachte, dass der für eine Flasche charakteristische, enge Flaschenhals 21 die Einkopplung von Licht L in das Innere der Pulpeflasche 20 erschwert, anders als beispielsweise bei Getränkedosen. Dieses Problem wird durch die beschriebene Vorrichtung 1 gelöst.

Die Vorrichtung 1 umfasst weiterhin eine Kamera 11. An dem ausgeleuchteten Teil der Innenwand der Pulpeflasche 20 wird das Licht gestreut und zumindest teilweise zurück durch die Mündung 22 gestrahlt. Dieses zurückgestrahlte Licht wird von der Kamera 11 aufgefangen, sodass die Kamera 11 ein Bild von dem ausgeleuchteten Teil der Innenwand der Pulpeflasche 20 ein Bild aufnimmt/erzeugt.

Um das gestreute Licht auf die Kamera 11 abzubilden, kann die Vorrichtung 1 ein weiteres Objektiv 12 aufweisen, das im Strahlengang zwischen der Flaschenmündung 22 und der Kamera 11 angeordnet ist. Für diesen Fall ist in der Figur der Strahlengang durch die gestrichelten Linien schematisch dargestellt. Bei dem weiteren Objektiv 12 kann es sich beispielsweise um ein Innenwandobjektiv mit großer Tiefenschärfe handeln. Dies hat den Vorteil, dass die Innenwand der Pulpeflasche über einen großen Bereich scharf abgebildet werden kann, was eine effiziente optische Inspektion erlaubt. Alternativ kann die Kamera 11 selbst über ein Objektiv verfügen, sodass das weitere Objektiv 12 nicht benötigt wird oder die Kamera 11 und das weitere Objektiv 12 werden als eine Einheit betrachtet.

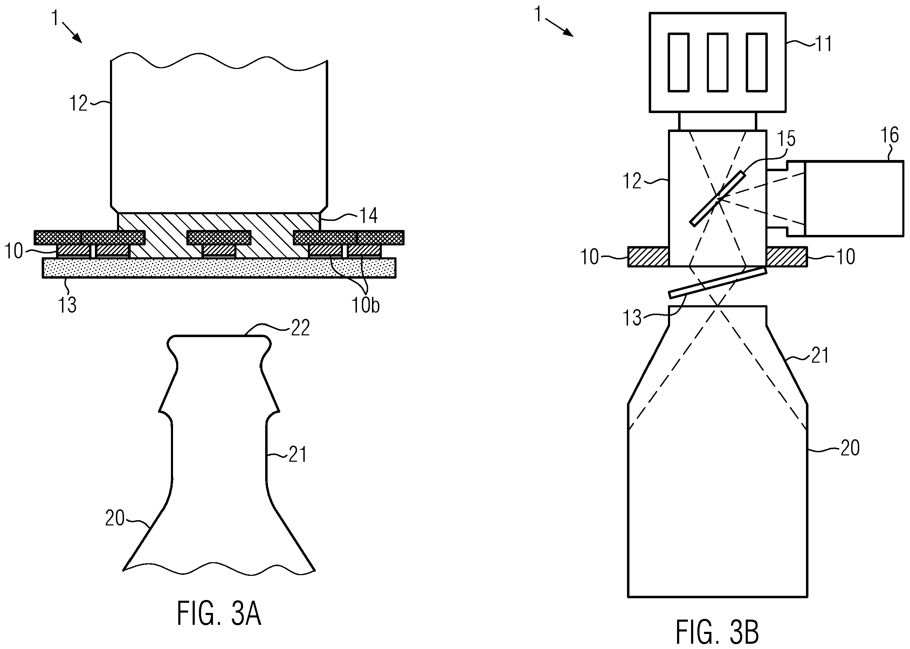

Die Beleuchtungseinrichtung 11 weist eine Öffnung auf (in Figur 3B dargestellt). In dieser Öffnung ist die Kamera 11 angeordnet. Falls die Vorrichtung 1 ein weiteres Objektiv 12 umfasst, ist dieses weitere Objektiv 12 in der Öffnung angeordnet. Wenn die Kamera 11 und das weitere Objektiv 12 als eine Einheit betrachtet werden, so ist diese Einheit in der Öffnung der Beleuchtungseinrichtung 10 angeordnet. Die Beleuchtungseinrichtung 10 kann beispielsweise ringförmig oder ringartig ausgebildet sein, sodass die Kamera 11 und/oder das weitere Objektiv 12 teilweise umgeben ist/sind. Durch diese Anordnung über einer sich darunter befindlichen Pulpeflasche 20 kann eine möglichst große Menge Licht L in die Mündung 22 der Pulpeflasche 20 eingestrahlt werden, die Innenwand gleichmäßig ausgeleuchtet werden und damit ein ausreichend belichtetes Bild für die optische Inspektion aufgenommen werden.

Figur 2 stellt eine erfindungsgemäße Vorrichtung 1 zur optischen Inspektion einer Pulpeflasche 20 gemäß einer zweiten Ausführungsform dar. Da die zweite Ausführungsform in weiten Teilen der ersten Ausführungsform entspricht, werden an dieser Stelle lediglich die Unterschiede zwischen den beiden Ausführungsformen beschrieben.

Zunächst umfasst die Vorrichtung einen Patternprojektor 16, der ausgebildet ist, ein optisches Muster zu erzeugen und zu emittieren. Bei diesem optischen Muster handelt es sich beispielsweise um ein Muster mit regelmäßigen und/oder periodischen Elementen wie ein Raster oder konzentrische Kreise. Dieses optische Muster wird in des Innere einer sich unter der Vorrichtung 1 befindlichen Pulpeflasche 20 eingestrahlt und leuchtet einen Teil der Innenwand aus. Zu diesem Zweck umfasst die Vorrichtung 1 weiterhin einen Strahlteiler 15, der derart angeordnet ist, dass das von dem Patternprojektor 16 emittierte Licht von dem Strahlteiler 15 durch die Mündung 22 der Pulpeflasche 20 reflektiert wird. Dazu ist der Strahlteiler 15 zwischen der Mündung 22 und der Kamera 11 angeordnet. Der schematische Strahlengang des optischen Musters ist ebenfalls durch gestrichelte Linien dargestellt.

Das optische Muster wird ebenso wie das von der Beleuchtungseinrichtung 10 emittierte Licht L an der Innenwand der Pulpeflasche 20 gestreut und von der Kamera 11 aufgenommen, um ein entsprechendes Bild von der Innenwand zu erzeugen. Der Bildgebungsprozess verläuft analog zur ersten Ausführungsform.

Bei dem Strahlteiler 15 handelt es sich beispielsweise um einen 50:50-Strahlteiler, der 50% der einfallenden Lichtintensität reflektiert und 50% der einfallenden Lichtintensität transmittiert. Grundsätzlich können auch andere Strahlteiler eingesetzt werden (z.B. 60:40 oder 75:25).

Mit der zweiten Ausführungsform der Vorrichtung 1 können nacheinander zwei Bilder aufgenommen werden. Für das erste Bild wird die Innenwand der Pulpeflasche 20 mittels der Beleuchtungseinrichtung 10 möglichst gleichmäßig ausgeleuchtet. Dies dient der Identifikation von groben Formfehlern, abdunkelnden Verschmutzungen und/oder Löcher im Boden oder der Seitenwand der Pulpeflasche 20. Für das zweite Bild wird die Innenwand der Pulpeflasche 20 mit dem optischen Muster ausgeleuchtet. Auf diese Weise können Verdickungen und/oder Vertiefungen im Boden oder der Seitenwand festgestellt werden, weil das, vorzugsweise ansonsten regelmäßige, optische Muster an den Verdickungen und/oder Vertiefungen verzerrt wird. Die beiden Bilder gemeinsam erlauben damit eine verlässliche Erkennung von Defekten in der Pulpeflasche 20. Es versteht sich, dass die beiden Bilder auch in umgekehrter Reihenfolge aufgenommen werden können.

Der zeitliche Abstand zwischen den beiden Bildern sollte möglichst kurz sein, beispielsweise weniger als 100 µs. Üblicherweise befinden sich die Pulpeflaschen 20 auf einer Transporteinrichtung und werden unter der Vorrichtung 1 hindurch transportiert. Dabei wird der Transport für die optische Inspektion nicht gestoppt. Zwischen den beiden Bildern bewegt sich die Pulpeflasche 20 also geringfügig. Wenn der zeitliche Abstand nun kurz genug ist, ist auch dieser räumliche Versatz gering genug, im Bereich von weniger als 1 mm, sodass sich weder die Ausleuchtung der Innenwand der Pulpeflasche 20, noch der Blickwinkel der Kamera 11 durch die Mündung 22 maßgeblich ändern. Dadurch können die beiden Bilder direkt miteinander verglichen werden, ohne dass etwaige Korrekturen notwendig wären.

In Figur 3A ist eine dritte Ausführungsform einer Vorrichtung 1 zur optischen Inspektion einer Pulpeflasche 20 gezeigt. Diese umfasst neben den bereits beschriebenen (Beleuchtungseinrichtung 10, Objektiv 12 und Pulpeflasche 20) ein Schutzfenster 13 und ein Schutzelement 14.

Das Schutzfenster 13 ist zwischen dem Objektiv 12 und der Pulpeflasche 20 angeordnet. Insbesondere ist das Schutzfenster 13 entspiegelt, weist also an seiner Oberfläche eine Antireflex-Beschichtung auf, um den Anteil von an dem Schutzfenster 13 reflektiertem Licht möglichst gering zu halten. Darüber hinaus dient das Schutzfenster 13 dem Zweck, das Objektiv vor möglichen Verschmutzungen oder mechanischen Stößen zu schützen. Insbesondere steht das Objektiv 12 nicht in direktem Kontakt mit dem Schutzfenster 13.

Die Beleuchtungseinrichtung 10 weist eine Mehrzahl von Lichtquellen 10b auf, die auf dem Schutzfenster 13 angeordnet sind. Wie in der Figur angedeutet, ist die Beleuchtungseinrichtung 10 ringförmig oder ringartig ausgebildet und umgibt ein Objektiv 12, das in einer Öffnung der Beleuchtungseinrichtung 10 angeordnet ist. Zwischen den Lichtquellen 10b und dem Objektiv 12 ist weiterhin ein Schutzelement 14 vorgesehen. Zum einen verhindert das Schutzelement 13, dass Licht direkt von den Lichtquellen 10b in das Objektiv 12 und damit auf die Kamera fallen kann. Darüber hinaus ist das Schutzelement 14 insbesondere aus einem elastischem Material wie Moosgummi, sodass das Objektiv 12 gegen eventuelle Stöße gegen das Schutzfenster 13 geschützt ist. Es versteht sich, dass anstelle des Objektivs 12 auch direkt die Kamera 11 angebracht sein kann. Die zuvor getroffenen Aussagen treffen in diesem Fall in gleicher Weise zu.

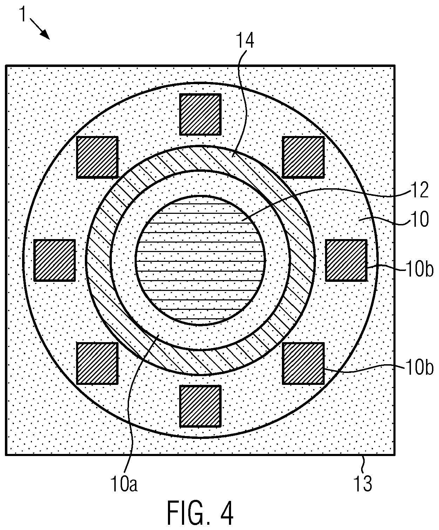

Figur 3B zeigt eine vierte Ausführungsform der Vorrichtung 1 zur optischen Inspektion einer Pulpeflasche 20. Diese unterscheidet sich von der in Figur 3A gezeigten dritten Ausführungsform durch eine alternative Anordnung des Schutzfensters 13. Dieses Schutzfenster 13 kann gegenüber der Horizontalen geneigt sein, beispielsweise in einem Bereich zwischen 5 Grad und 20 Grad. Dadurch wird Licht von der Beleuchtungseinrichtung 10 nicht in Richtung der Kamera reflektiert, sondern vorwiegend in Richtung des Schutzelements 14 (in dieser Figur nicht gezeigt, aber sichtbar in Figuren 3A und 4). Das Schutzelement 14 kann insbesondere schwarz sein, um die Reflektion von Licht an dem Schutzelement 14 zu unterdrücken.

Die übrigen in dieser Figur dargestellten Elemente sind bereits aus den vorangegangenen Ausführungen bekannt und werden an dieser Stelle nicht erneut erläutert.

Figur 4 ist eine Draufsicht auf die Vorrichtung 1 der dritten Ausführungsform, wobei man die Vorrichtung 1 von unten durch das Schutzfenster 13 hindurch sieht.

Die Beleuchtungseinrichtung 10 umfasst eine Mehrzahl von Lichtquellen 10b, beispielsweise LEDs, die an der ringförmig ausgebildeten Beleuchtungseinrichtung 10 angeordnet sind. Dabei ist die gezeigte Zahl an Lichtquellen 10b und deren Anordnung keinesfalls einschränkend aufzufassen. Beispielsweise kann es sich bei den Lichtquellen 10b auch um sogenannte Chip-on-Board-LEDs handeln, die dicht an dicht angeordnet sind, um eine hohe Leuchtdichte zu erreichen.

Die (ringförmige) Beleuchtungseinrichtung 10 weist eine Öffnung 10a auf, die im gezeigten Beispiel kreisförmig und konzentrisch mit der Beleuchtungseinrichtung 10 ist. Wie bereits in Bezug auf Figur 3A beschrieben, ist innerhalb der Öffnung das Objektiv 12 angeordnet. Das Objektiv ist durch das Schutzelement 14 vor direktem Lichteinfall von der Beleuchtungseinrichtung 10 abgeschirmt.

Es versteht sich, dass die beschriebenen Ausführungsformen auch in geeigneter Weise miteinander kombiniert werden können. Beispielsweise können ein Patternprojektor zusammen mit einem Strahlteiler und ein Schutzfenster in einer gemeinsamen Ausführungsform implementiert sein. Die gleichen Erwägungen gelten auch für das Schutzelement, welches zudem unabhängig von dem Schutzfenster vorliegen kann.

## Patentansprüche

1. Vorrichtung (1) zur optischen Inspektion einer Pulpeflasche (20), umfassend:
eine Beleuchtungseinrichtung (10) mit einer Öffnung (10a), wobei eine Mündung der Pulpeflasche (20) unterhalb der Öffnung der Beleuchtungseinrichtung (10) angeordnet werden kann; und
eine Kamera (11), die ausgebildet ist, ein Bild von zumindest einem Teil einer Innenwand der Pulpeflasche (20) durch die Öffnung der Beleuchtungseinrichtung hindurch oder von der Öffnung der Beleuchtungseinrichtung aus aufzunehmen,
wobei die Pulpeflasche (2) derart angeordnet werden kann, dass der Teil der Innenwand der Pulpeflasche (20) von der Beleuchtungseinrichtung (10) ausgeleuchtet wird.

2. Vorrichtung (1) nach Anspruch 1, wobei die Kamera (11) in der Öffnung (10a) der Beleuchtungseinrichtung (10) angeordnet ist.

3. Vorrichtung (1) nach Anspruch 1 oder 2, wobei die Beleuchtungseinrichtung (10) so angeordnet ist, dass Licht (L) von der Beleuchtungseinrichtung (10) in einem Winkel (α) zwischen 60° und 90°, insbesondere zwischen 70° und 90°, gegenüber einer Mündungsebene der Pulpeflasche (20) eingestrahlt wird.

4. Vorrichtung (1) nach einem der vorangegangenen Ansprüche, weiterhin umfassend ein entspiegeltes Schutzfenster (13),
wobei die Beleuchtungseinrichtung (10) und die Kamera (11) auf der der Pulpeflasche abgewandten Seite des Schutzfensters angeordnet sind, und
wobei die Kamera (11) nicht in direktem Kontakt mit dem Schutzfenster steht.

5. Vorrichtung (1) nach einem der vorangegangenen Ansprüche, wobei zwischen der Kamera (11) und dem Schutzfenster (13) ein Schutzelement (14) aus elastischem und lichtundurchlässigem Material, beispielsweise Moosgummi, angeordnet ist.

6. Vorrichtung (1) nach einem der vorangegangenen Ansprüche, wobei die Beleuchtungseinrichtung (10) eine Mehrzahl von Lichtquellen (10b) wie Chip-on-Board-LEDs umfasst.

7. Vorrichtung (1) nach einem der vorangegangenen Ansprüche, weiterhin umfassend einen Strahlteiler und eine Lichtquelle,
wobei der Strahlteiler zwischen der Mündung der Pulpeflasche (20) und der Kamera (11) angeordnet ist,
wobei die Lichtquelle als homogene Flächenbeleuchtung ausgebildet ist und vom Strahlteiler zumindest teilweise durch die Mündung in das Innere der Pulpeflasche (20) eingeblendet werden, und
wobei insbesondere zwischen dem Strahlteiler und der Lichtquelle ein optisches Element angeordnet ist, beispielsweise umfassend ein Linsenelement und/ oder einen Polarisationsfilter.

8. Vorrichtung (1) nach einem der Ansprüche 1 bis 6, weiterhin umfassend:
einen Strahlteiler (15), der zwischen der Mündung (22) der Pulpeflasche (20) und der Kamera (11) angeordnet ist; und
einen Patternprojektor (16), der ausgebildet ist, ein optisches Muster zu erzeugen,
wobei der Patternprojektor (16) derart angeordnet ist, dass das von dem Patternprojektor (16) erzeugte Muster vom Strahlteiler (15) teilweise durch die Mündung (22) in das Innere der Pulpeflasche (20) reflektiert wird.

9. Vorrichtung (1) nach Anspruch 8, wobei das Muster rasterförmig ist und/oder konzentrische Kreise umfasst.

10. System zur Herstellung und Inspektion von Pulpeflaschen (20), umfassend:
eine Vorrichtung zur Herstellung von Pulpeflaschen (20), und
die Vorrichtung (1) zur optischen Inspektion einer Pulpeflasche (20) nach einem der vorangegangenen Ansprüche,
wobei das System derart ausgebildet ist, dass die Pulpeflaschen (20) nach der Herstellung zu der Vorrichtung (1) zur optischen Inspektion transportiert werden können.

11. Verfahren zur optischen Inspektion eines Pulpebehälters, insbesondere einer Pulpeflasche, umfassend:
Beleuchten eines Teils einer Innenwand des Pulpebehälters durch seine Mündung mit einer Beleuchtungseinrichtung (10), und
Aufnehmen eines Bildes durch die Mündung des Pulpebehälters mit einer Kamera (11),
indem das aus dem Inneren des Pulpebehälters gestreute Licht mittels der Kamera (11) aufgenommen wird.

12. Verfahren nach Anspruch 11, wobei Licht (L) von der Beleuchtungseinrichtung (10) in einem Winkel (θ) zwischen 60° und 90°, insbesondere zwischen 70° und 90°, gegenüber einer Mündungsebene der Pulpeflasche (20) eingestrahlt wird.

13. Verfahren nach Anspruch 11 oder 12, weiterhin umfassend:
Beleuchten des Teils der Innenwand des Pulpebehälters mit einem optischen Muster, das beispielsweise von einem Patternprojektor (16) erzeugt wird, und
Aufnehmen eines weiteren Bildes, indem das aus dem Inneren des Pulpebehälters gestreute Licht mittels der Kamera (11) aufgenommen wird.

14. Verfahren nach Anspruch 13, wobei das Muster rasterförmig ist und/oder konzentrische Kreise umfasst.

15. Verfahren nach einem der Ansprüche 13 oder 14, wobei der zeitliche Abstand zwischen der Aufnahme des Bilds und der Aufnahme des weiteren Bilds weniger als 100 µs, insbesondere weniger als 50 µs, beträgt.
